# NEW EUROPEAN PATENT SPECIFICATION

(11) **EP 0 354 893 B2**
(45) Date of publication and mention of the opposition decision: **13.03.2002**
(45) Mention of the grant of the patent: 02.11.1994
(21) Application number: 89870121.4
(22) Date of filing: 31.07.1989
(51) Int. Cl.: C08F 4/649, C08F 10/00, C08F 10/06

(54) **Process for producing large symmetrical polymer particles**
Verfahren zur Herstellung grosser symmetrischer Polymerteilchen
Procédé de production de grandes particules symétriques de polymères

(30) Priority: 05.08.1988 US 229361
(43) Date of publication of application: 14.02.1990
(73) Proprietor: FINA TECHNOLOGY, INC., Dallas, Texas 75206 (US)
(72) Inventor: Ewen, John A., Houston Texas 77068 (US)
(74) Representative: Leyder, Francis

(56) References cited:
- EP-A- 0 197 319
- EP-A- 0 279 863
- EP-A- 0 287 666
- EP-A- 0 295 312
- EP-A- 0 302 424
- EP-A- 0 327 649
- WO-A-88/05057
- US-A- 3 893 989

## Description

### BACKGROUND OF THE INVENTION

The present invention relates to a process for preparing large sized polypropylene particles of high bulk density. More particularly the present invention relates to a high yield process for preparing large sized symmetrical polypropylene particles using a metallocene catalyst.

Polypropylene obtained from polymerization reactors is generally in the form of a powder having a wide particle size distribution. These polypropylene powders have a poor pourability and an undesirable amount of powder fines making them difficult to handle and process. Thus, prior to processing, the polypropylene must generally be formed into large particles or pellets.

In order to obtain large particles of polypropylene a pelletizing step is necessary. Because of this pelletizing step the material cost will increase. It would, therefore, he highly desirable to obtain, in the polymerization process, large polypropylene particles that could be used in place of pellets.

In particular, large sized polypropylene particles, having a particle diameter in the range of about 300 to 800 microns and a narrow particle size distribution, have many advantages in various applications including for example, ease of handling, etc.

Large sized polymer particles have been prepared by prior known polymerization methods such as disclosed in U.S. 4,694,035 in which large sized polymer particles are prepared by seeded polymerization.

U.S. patent no. 3,687,919 discloses a process for producing spherical particles of ethylenic monomers with controlled size distribution by a two-stage, polymerization method wherein a portion of the monomer is prepolymerized with turbulent agitation, the prepolymerized monomer is mixed with a large quantity of additional monomer and the resulting mixture is slowly polymerized with mild agitation. The quantity of monomer prepolymerized and the speed of agitation during the prepolymerization is said to serve as control on size distribution of the final product.

A separate group of catalysts for producing polyolefins, called metallocene catalysts, have many advantages over other types of polyolefin polymerization catalysts. The advantages in using metallocene catalysts include, for example, high productivity and the ability to control or change many polymer properties by altering or varying the type of metallocene used.

The use of metallocene catalysts in the polymerization of olefins is known in the art. German patent application 2,608,863 discloses a catalyst system for the polymerization of ethylene which system consists of a bis(cyclopentadienyl) titanium dialkyl, an aluminum trialkyl and water. Similarly, German patent application 2,608,933 discloses a zirconium metallocene of the formula (cyclopentadienyl)ₙZrY₄₋ₙ, wherein Y represents R, CH₂AIR₂, CH₂CH₂AIR₂, or CH₂CH(AIR₂) and where R is an alkyl or metallo alkyl and n is an integer from 1-4.

Metallocene catalysts are known to be useful in the copolymerization of ethylene and other alpha-olefins. U.S. patent no. 4,542,199 to Kaminsky, et al discloses a catalyst system that comprises a catalyst of the formula (cyclopentadienyl)₂ MeRHaI, in which R is a halogen, a cyclopentadienyl group, or a C₁-C₆ alkyl radical; Me is a transition metal, in particular zirconium, and Hal is a halogen, in particular chlorine. The catalyst system also includes an alumoxane of the formula Al₂OR₄(AI(R)-0)n for a linear molecule and/or (Al(R)-0)ₙ₊₂ for a cyclical molecule in which n is a number from 4-20 and R is a methyl or ethyl radical. A similar catalyst system is disclosed in U.S. patent no. 4,404,344.

Metallocene catalysts particularly useful in the polymerization of propylene and higher alpha-olefins are disclosed in European patent publication no. 0185918. This publication discloses a zirconium metallocene catalyst that includes a bridge between two cyclopentadienyl rings. The bridge is described as being a linear hydrocarbon with 1-4 carbon atoms or a cyclical hydrocarbon with 3-6 carbon atoms.

International Patent Application WO 88/05057 claims a catalyst for the polymerization of olefins composed of a transition metal (M) of group IV B compound and aluminoxane, wherein the atomic ratio M/Al is in the range of 0.2 to 0.001, which has an average particle diameter of 5 to 200 µm and a specific surface area of 20 to 1000 m²/g. Further it discloses a method of selecting particle size of the solid catalyst in order to obtain high bulk density polymers.

European Patent Application EP 0302424 claims a process for the preparation of 1-olefin (co)polymers in the presence of a metallocene/aluminoxane catalyst system. Example 2 of said application discloses polypropylene having a bulk density of 500 g/dm³ and 16,6% of the particles thereof having a diameter smaller than 400 µm.

Prior to the present invention the method of preparing large symmetrical polypropylene particles having a high bulk density using metallocene catalysts was not known. The metallocene catalyst systems described above typically produce a polymer product in the form of very small particles.

Homogeneous (slurry) polymerizations, such as with toluene as a solvent, using metallocene catalysts, yield small particles of fluff having low bulk density (0.1 -0.2 g/ml) and an open polymer morphology. The fluff or powder, resulting from slurry polymerizations is difficult to handle. This same problem occurs in low temperature (around 50 ° C and lower for propylene) liquid (bulk) polymerizations.

High temperature bulk polymerizations, without prepolymerization, using metallocene catalysts, produce small particles of fluff having a closed morphology. These small fluff particles compress together into jagged pieces which then agglomerate thereby giving the particles high bulk density. These particles have a high bulk density, but they are nevertheless undesirable since they are not uniform and are difficult to handle.

High bulk density is of practical importance in obtaining high reactor solids content and in fluff handling operations prior to extrusion and pelletization. Polymers of low bulk density are difficult to handle and are in fact dangerous if the right particle mixture is in the air and a spark is brought into contact with the particles.

### OBJECTS OF THE INVENTION

It is an object of the present invention to provide large polypropylene particles and a polymerization process for the preparation thereof.

It is a more specific object of the present invention to provide large symmetrical polypropylene particles having a relatively narrow particle size distribution.

It is yet a more specific object of the present invention to provide free flowing large symmetrical polypropylene fluff particles having a high bulk density.

It is yet a further object of the present invention to provide a high yield process for producing large symmetrical polypropylene particles with a high bulk density using metallocene catalysts.

### SUMMARY OF THE INVENTION

In accordance with the present invention, the applicant has discovered a method of producing large, symmetrical polypropylene particles having a high bulk density using metallocene catalysts. This process entails the precontacting of an organoaluminum compound with a metallocene thereby forming an active complex, precipitating the active complex with a hydrocarbon that is a nonsolvent for the complex, prepolymerizing the precipitated complex by contacting the complex with propylene at a temperature below the polymerization temperature of propylene, followed by polymerizing propylene under polymerization conditions thereby producing large symmetrical polypropylene particles.

### BRIEF DESCRIPTION OF THE DRAWINGS

Microphotographs 1-8 were all taken at a magnification of 50x. These microphotographs are of polypropylene particles obtained from polymerization processes all using a metallocene catalyst in the absence of a solvent for the catalyst (bulk polymerization).

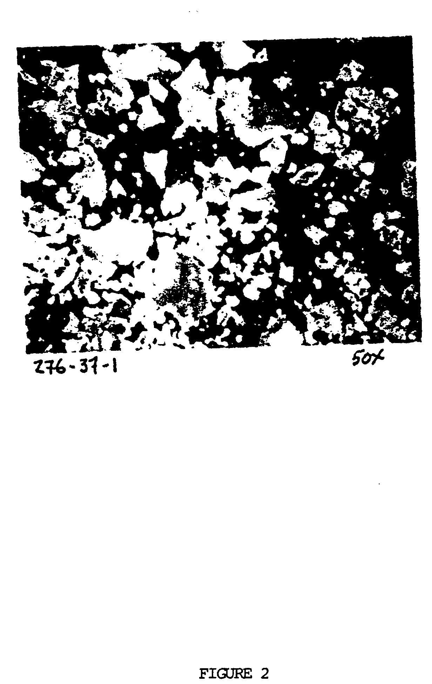

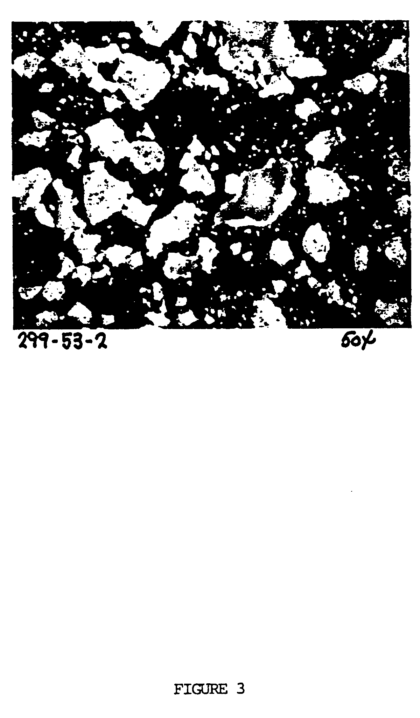

Figures 1-3 are microphotographs of polypropylene particles obtained by bulk polymerization at polymerization temperature with no in situ prepolymerization.

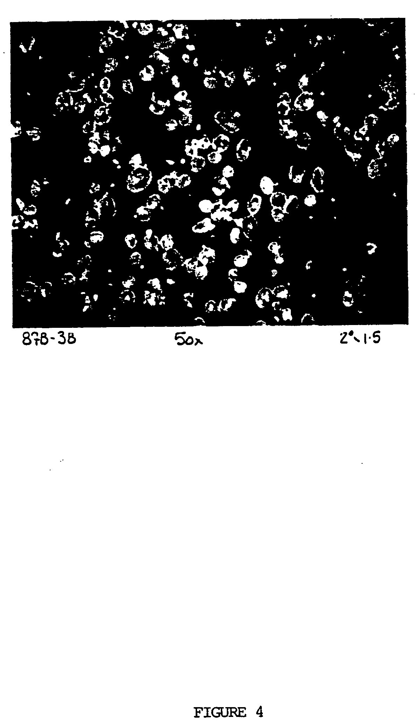

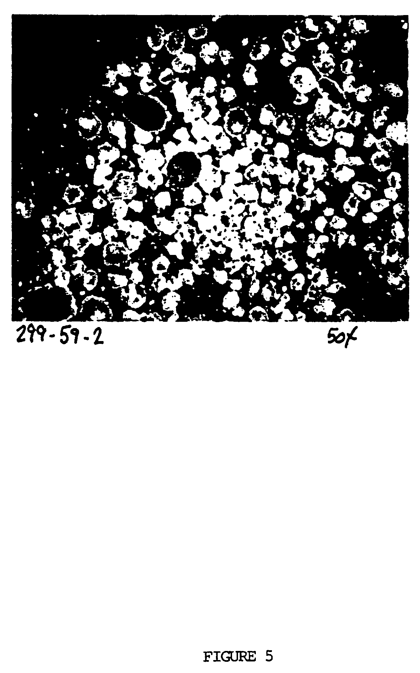

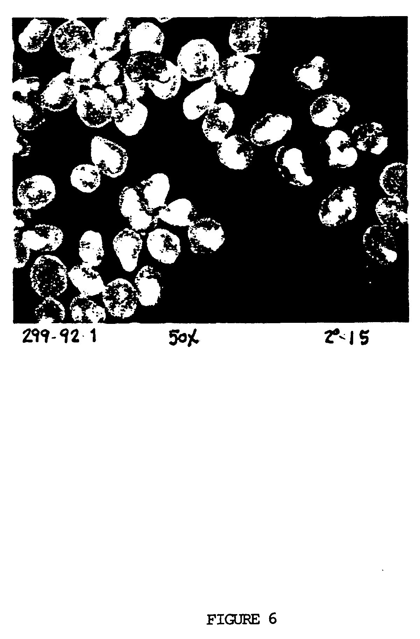

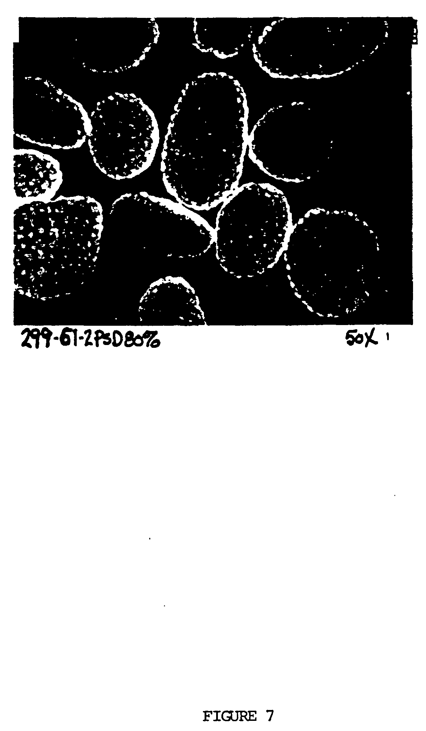

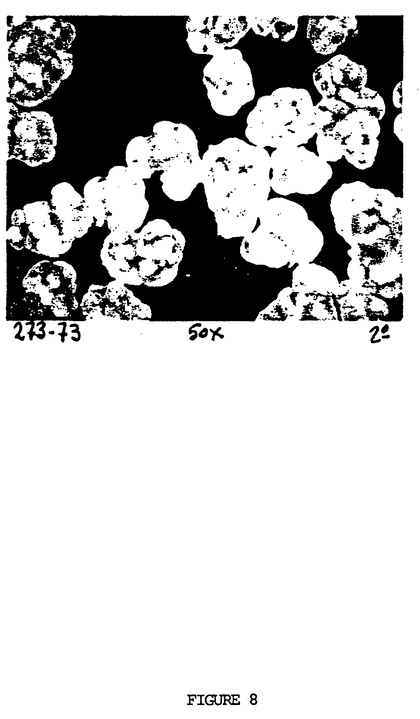

Figures 4-8 are microphotographs of polypropylene particles obtained by bulk polymerization with low-temperature in situ prepolymerization.

### DETAILED DESCRIPTION OF THE PRESENT INVENTION

The process of the present invention produces large symmetrical polypropylene particles having a high bulk density. The process according to the present invention requires contacting a precipitated active complex with propylene at a temperature significantly below the propylene polymerization temperature to prepolymerize the complex, followed by polymerizing propylene under polymerization conditions thereby producing large symmetrical polypropylene particles.

The active complex is formed by precontacting an organoaluminum compound with a metallocene catalyst. After the complex is formed it is generally precipitated with a hydrocarbon that is a nonsolvent for the complex. In order to produce large symmetrical polypropylene particles it is important that the precipitated active complex, however it is formed, be prepolymerized at a reduced temperature prior to polymerizing propylene under polymerization conditions.

The hydrocarbon that is used to precipitate the active complex is nonaromatic (alycyclic and aliphatic). The important requirement for this hydrocarbon, in order to precipitate the complex, is simply that the active complex be insoluble therein. This "nonsolvent" hydrocarbon preferably has from 3 to 12 carbon atoms, more preferably from 3 to 7 carbon atoms, due to availability, volatility and ease in handling.

In a preferred aspect of the present invention, the "nonsolvent" hydrocarbon and the monomer are one and the same. The use of the monomer as the nonsolvent is advantageous since it alleviates the solvent recovery step and shortens the prepolymerization time. When the monomer is also the "precipitating hydrocarbon" the precipitation must also be conducted below the polymerization temperature of the monomer.

The prepolymerization of the catalyst, according to the present invention, must be conducted below the polymerization temperature of propylene otherwise large uniform polypropylene particles of high bulk density generally cannot be produced. Preferably this temperature is significantly below the polymerization temperature of propylene since, along with other factors, a lower temperature generally produces larger particles (a long prepolymerization time, a slow stirring rate and a high catalyst efficiency also affect particle size).

It is envisioned that any low temperature would be useful in this prepolymerization step provided prepolymerization was completed within a reasonable time. In the case of propylene, the prepolymerization temperature is generally below 70°C, preferably below 35 to 40°C. When using propylene, ambient temperature is most preferred due to convenience.

The prepolymerization of the present invention is carried out in two steps since this allows for better control of the final particle size. In the first prepolymerization step, the precipitated complex is brought into contact with propylene at a temperature below the polymerization temperature of propylene This temperature is held for a time sufficient to prepolymerize the complex. This time is generally from 0 to 10 minutes, preferably 1 to 6 minutes, with about 5 minutes being most preferred. In the second prepolymerization step the complex and propylene are then heated at a specified rate, further prepolymerizing the complex, until the final polymerization temperature is reached. The polymerization is then allowed to take place at this temperature and then the reaction is terminated. The first prepolymerization step is carried out at a temperature as indicated above and the second prepolymerization step is carried out while rapidly heating the reaction mixture. This second prepolymerization step is carried out while the reaction mixture is heated at a rate of at least 4.5°C per minute to the polymerization temperature so as to avoid producing a large quantity of polymer below the final polymerization temperature. This step is preferably carried out while heating the complex and propylene at a rate not less than 5°C per minute, more preferably, not less than 10°C per minute.

The final polymerization temperature is below 80° to 85°C and preferably between 50° and 80°C with about 70°C being most preferred. Therefore, the initial prepolymerization temperature is about 25°C, the heating rate is not less than 10°C per minute and the final polymerization temperature is about 70°C.

The bulk density of the resulting large uniform polypropylene particles is generally between 0.3 and 0.45 g/ml and can be as high as 0.5 g/ml.

The process of the present invention preferably produces polypropylene particles in which the majority of the particles have a particle size between 300 and 800 microns, more preferably 500 to 2,000 microns, with about 90 percent of the particles being larger than 100 microns. The process of the present invention can even produce particles with about 95 percent of the particles being larger than 400 microns and in some cases 99 percent of the particles being larger than 400 microns.

The process of the present invention can be conducted in any type of polymerization reactor, provided large symmetrical polypropylene particles are produced, Examples of suitable reactors include batch type reactors, loop type reactors, etc.

The metallocene catalyst used in accordance with the present invention is described by the formula:

R"(C₅ R'ₘ)₂ Me Qₚ

(C₅R'ₘ) is a cyclopentadienyl or substituted cyclopentadienyl; R' is hydrogen or hydrocarbyl radical(s) having 1-20 carbon atoms, and each R' can be the same or different; R" is an alkylene radical having 1-4 carbon atoms, a silicon hydrocarbyl group a germanium hydrocarbyl group , an alkyl phosphine, or an alkyl amine, and R" acts to bridge the two (C₅R'ₘ) rings; Q is a hydrocarbon radical having 1-20 carbon atoms or a halogen; Me is a group 4b, 5b, or 6b metal of the Periodic Table of Elements; m is an integer from 0-4; and p is an integer from 0-3.

In a preferred embodiment of the present invention Me is selected from tianium, zirconium, and hafnium with zirconium being most preferred.

R' may be hydrogen or a hydrocarbyl radical. Examples of hydrocarbyl radicals useful as R' include alkyl, alkenyl, aryl, alkylaryl or arylalkyl radicals. More specifically, exemplary hydrocarbyl radicals include methyl, ethyl, propyl, butyl, amyl, isoamyl, hexyl, isobutyl, heptyl, octyl, nonyl, decyl, cetyl, phenyl, methylene, ethylene, propylene, and other like groups. In a preferred embodiment, the R's are selected so that (C₅(R')₄) is an indenyl radical (Ind) or a hydogenated indenyl radical (IndH₄).

R" is a stable component that bridges the two (C₅(R')₄) rings in order to render the catalyst stereo-rigid. R" can be organic or inorganic and can include groups depending from the portion acting as the bridge. Examples of R" include alkylene radicals having 1-4 carbon atoms, silicon hydrocarbyl groups, germanium hydrocarbyl groups, alkyl phosphines, alkyl amines, boron, nitrogen, sulfur, phosphorous, aluminum and other groups containing these elements. The preferred R" components are methylene (-CH₂-), ethylene (-C₂H₄-), alkyl silicons, and cycloalkyl silicons such as cyclopropyl silicon, among others.

Similarly, Q can be any of the hydrocarbyl groups listed for R' above, but preferably, Q is a halogen, and most preferably, Q is chlorine. Also in the preferred embodiment, p is 2.

The metallocene catalyst should be chiral, i.e., non-superimposable on its mirror image, or prochiral for the polymerization of propylene and higher alpha-olefins in order to produce a useful polymer product. It is not necessary, however, for the catalyst to be chiral or stereo-rigid for the polymerization of ethylene or predominantly ethylene copolymers.

In a more preferred embodiment of the present invention, the metallocene catalyst should be either syndiospecific or isospecific. Syndiospecific metallocenes have cyclopentadienyl groups that are substantially dissimilar. These metallocenes produce polyolefins with a high syndiotactic index when prepared from monomers having at least 3 carbon atoms, such as propylene. It was discovered that syndiotactic polyolefins, such as polypropylene, have lower heats of crystallization than the corresponding isotactic polymers. In addition, for the same mole fraction of steric imperfections in the polymer chain, syndiotactic polymers have a higher melting point than isotactic polymers.

The use of a metallocene catalyst generally results in a polyolefin having a molecular weight distribution between about 2 and 10, preferably between 2 and 3.

The catalyst can be prepared by any method known in the art. It is important, however, that the catalyst complex be "clean" as usually low molecular weight, amorphous polymer is produced by impure catalysts. Generally, the preparation of the catalyst complex consists of forming and isolating the Cp or substituted Cp ligands which are then reacted with a halogenated metal to form the complex.

Consistent with the prior disclosures of metallocene catalysts for the production of polyolefins, the catalysts of the present invention are particularly useful in combination with an aluminum cocatalyst, preferably an alumoxane, an alkyl aluminum, or a mixture thereof. In addition, a complex can be isolated between a metallocene catalyst as described herein and an excess amount of aluminum cocatalyst in accordance with the teachings of European Patent Publication No. 226,463 published on June 24, 1987 assigned to Exxon Chemical Patents Inc., with Howard Turner listed as the inventor. The alumoxanes useful in combination with the catalysts of the present invention can be represented by the general formula (R-AI-O-) in the cyclic form and R(R-Al-O)ₙ-ALR2 in the linear form wherein R is an alkyl group with 1 to 5 carbon atoms and n is an integer from 1 to about 20. Most preferably, R is a methyl group. The alumoxanes can be prepared by various methods known in the art. Preferably, they are prepared by contacting water with a solution of trialkyl aluminum, such as, trimethyl aluminum, in a suitable solvent such as benzene. Another preferred-method includes the preparation of alumoxane in the presence of a hydrated copper sulfate as described in U.S. Patent No. 4,404,344 the disclosure of which is incorporated herein by reference. This method comprises treating a dilute solution of trimethyl aluminum in toluene with copper sulfate. The preparation of other aluminum cocatalysts useful in the present invention can be prepared by methods known to those skilled in the art.

The metallocene catalysts used in the present invention are produced using methods known to those skilled in the art and include those methods in the copending applications cited above.

The following examples are given in order to illustrate the present invention, but are not intended to limit the reasonable scope thereof.

### Examples

In these Examples three different polymerization procedures were utilized. These procedures, designated as A, B and C are described as follows:

### Procedure A

### (bulk polymerization with no in situ prepolymerization)

A baked-out two or four liter stainless steel Zipperclave was utilized as the reaction vessel and was purged with dry nitrogen. Three-fourths of the total amount of liquid propylene for the run (usually about 900 ml), was added to the reaction vessel. The stirrer was set at 1,200 rpm and the reaction was warmed to the desired polymerization temperature. The metallocene was dissolved in a bottle containing 10 to 20 ml of toluene. The alumoxane was dissolved in a bottle containing 10 ml of toluene. The contents of both bottles were canulated into a dry de-areated stainless-steel bomb and were left in the bomb (precontacted) for a specified time to form an active catalyst complex? The catalyst was charged to the reactor by rapidly pumping liquid propylene through the bomb. The polymerizations were terminated by venting the monomer.

### Procedure B

### (slurry polymerization with no in situ prepolymerization)

This procedure is similar to Procedure A except that a specified volume of toluene was first canulated into the reactor under a nitrogen atmosphere.

### Procedure C

### (bulk polymerization with in situ prepolymerization)

The precontacted catalyst solution (metallocene and alumoxane in toluene) was canulated into the reactor under a nitrogen atmosphere at room temperature. Propylene was added at 30°C and the catalyst was allowed to be prepolymerized for the specified time. The reactor contents were then heated to polymerization temperature in less than 5 minutes (second prepolymerization step) then allowed to polymerize. Polymerizations were then terminated by rapid venting of the monomer.

The results of the polymerizations are given in the following Table.

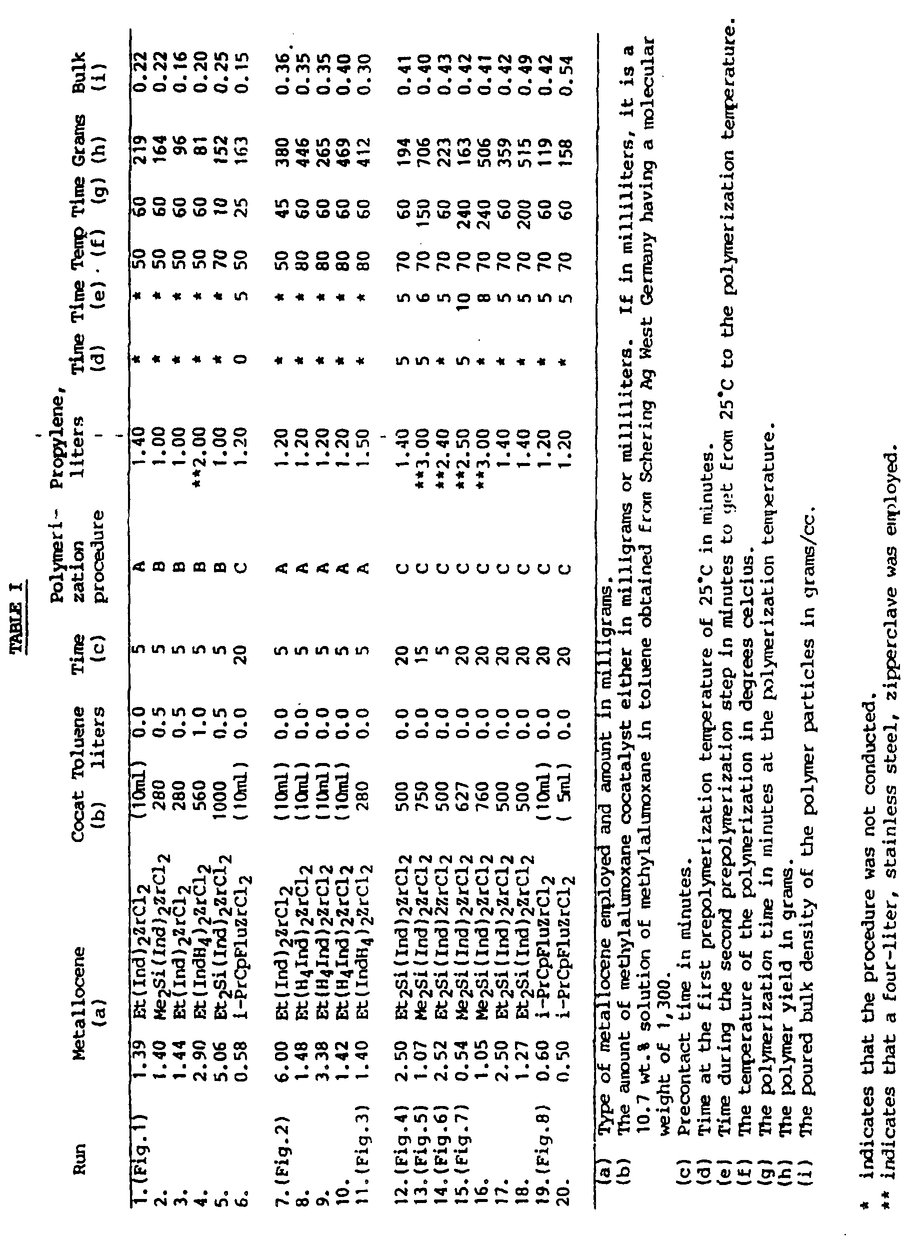

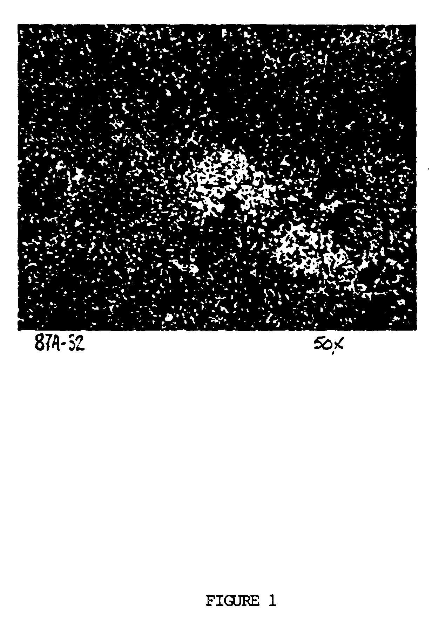

As indicated in Table I, polymerization run 1 was a low temperature bulk polymerization, polymerization runs 2-5 were slurry polymerizations, and polymerization 6 was a low temperature bulk polymerization with a prepolymerization step. These runs yielded small polymer particles of low bulk density all resembling the particles in Fig. 1 (microphotograph of the particles produced by run no. 1).

Polymerization run 7 was a low temperature bulk polymeration without a prepolymerization step using a large amount of metallocene, and polymerization runs 8-11 were bulk polymerizations at high temperature without a prepolymerization step. These runs yielded irregular, agglomerated particles of polymer having a high bulk density.

Runs 12-20 were bulk polymerizations at high temperature with prepolymerization. These runs yielded large symmetrical particles of polymer having a high bulk density.

The above Table also shows that bulk polymerizations of propylene at 70°C and 80°C yield high activities and high bulk densities, and that particle size and particle shape control at these conditions are obtained with prepolymerization of catalysts.

The following tables show the particle size distribution for runs 15 and 19.

**TABLE II**

| Run No. 15 | | | | | | |
|---|---|---|---|---|---|---|
| PARTICLE SIZE DENSITY | | | | | | |
| Mesh Size | Microns | Microns (Max.) | Gross Wt. (gms) | Tare Wt. (gms) | Weight % | Sum Wt. % |
| Zero | 0 | 10 | 0.0 | 0.00 | 0.00 | 0.00 |
| Pan | 106 | 106 | 347.8 | 347.10 | 0.70 | 0.70 |
| 140 | 106 | 180 | 391.3 | 390.70 | 0.60 | 1.30 |
| 80 | 180 | 250 | 415.8 | 415.05 | 0.75 | 2.05 |
| 60 | 280 | 355 | 401.5 | 398.90 | 2.60 | 4.65 |
| 45 | 355 | 500 | 441.4 | 427.10 | 14.30 | 18.95 |
| 35 | 500 | 850 | 494.5 | 430.90 | 63.60 | 82.55 |
| 20 | 850 | 2000 | 506.0 | 496.70 | 9.30 | 91.85 |
| 10 | 2000 | 5000 | 601.7 | 591.30 | 10.40 | 102.25 |

**TABLE III**

| Run No. 19 | | | | | | |
|---|---|---|---|---|---|---|
| PARTICLE SIZE DENSITY | | | | | | |
| Mesh Size | Microns | Microns (Max.) | Gross Wt. (gms) | Tare Wt (gms) | Weight % | Sum Wt. % |
| Zero | 0 | 10 | 0.00 | 0.00 | 0.00 | 0.00 |
| Pan | 106 | 106 | 347.25 | 347.10 | 0.15 | 0.15 |
| 140 | 106 | 180 | 390.91 | 390.70 | 0.21 | 0.36 |
| 80 | 180 | 250 | 415.44 | 415.05 | 0.39 | 0.75 |
| 60 | 280 | 355 | 399.20 | 398.90 | 0.30 | 1.05 |
| 45 | 355 | 500 | 432.49 | 427.10 | 5.39 | 6.44 |
| 35 | 500 | 850 | 480.25 | 430.90 | 49.35 | 55.79 |
| 20 | 850 | 2000 | 529.82 | 496.70 | 33.12 | 88.91 |
| 10 | 2000 | 5000 | 605.44 | 591.30 | 14.14 | 103.05 |

Table II shows that more than 95 wt.% of the polypropylene particles produced by run no. 15 are larger than 355 microns and that the estimated median particle size for particles produced in this run is 648 microns.

Table III shows that about 99 wt.% of the polypropylene particles produced by run no. 19 are larger than 355 microns and that the estimated median particle size for particles produced in this run is 799 microns.

## Claims

1. A process for producing symmetrical polypropylene particles comprising :
(a) prepolymerizing a precipitated active complex of an organoaluminum compound and a metallocene catalyst by contacting said complex with propylene at a temperature from 25°C to 40°C
(b) further prepolymerizing the complex by heating to the polymerization temperature at a rate of at least 4.5°C per minute, and
(c) polymerizing the propylene at a polymerization temperature higher than 50°C and lower than 85°C thereby producing symmetrical polypropylene particles between 300 and 800 microns with 90% of the particles being larger than 100 microns, wherein said metallocene catalyst is described by the formula:
R"(C₅R'ₘ)₂ Me Qp
(C₅R'm) is a cyclopentadienyl or substituted cyclopentadienyl; R' is hydrogen or hydrocarbyl radical(s) having 1-20 carbon atoms, and each R' can be the same or different; R" is an alkylene radical having 1-4 carbon atoms, a silicon hydrocarbyl group, a germanium hydrocarbyl group, an alkyl phosphine, or an alkyl amine, and R" acts to bridge the two (C₅R'm) rings; Q is a hydrocarbon radical having 1-20 carbon atoms or a halogen; Me is a group 4b, 5b, or 6b metal of the Periodic Table of Elements; m is an integer from 0-4; and p is an integer from 0-3.

2. The process according to claim 1 wherein said precipitated active complex is prepared by precontacting said organoaluminum compound with said metallocene catalyst thereby forming an active complex, followed by precipitating said active complex with a hydrocarbon that is a nonsolvent for said active complex.

3. The process according to claim 2 wherein said metallocene catalyst is selected from the group consisting of syndiospecific and isospecific metallocenes.

4. The process according to claim 1 wherein said metallocene catalyst is selected from the group consisting of zirconocene, halfnocene and titanocene catalysts.

5. The process according to claim 4 wnerein said metallocene catalyst is a zirconocene catalyst.

6. The process according to claim 1 wherein said organoaluminum compound is a methylalumoxane.

7. The process according to Claim 1 wherein the prepolymerization temperature of step (a) is held for a time between 0 and 10 minutes.

8. The process according to Claim 1 wherein the prepolymerization temperature is 30°C and the polymerization temperature is 70°C.

9. The process according to Claim 1 wherein the complex is further prepolymerized by heating to the polymerization temperature at a rate of at least 5°C per minute.

10. The process according to Claim 1 wherein the complex is further prepolymerized by heating to the polymerization temperature at a rate of at least 10°C per minute.

11. A process according to claim 1 wherein the symmetrical polypropylene particles have a relatively narrow particle size distribution, said process comprising :
(a) precontacting an organoaluminum compound with a metallocene catalyst thereby forming an active complex, wherein said metallocene catalyst is described by the formula :
R"(C₅R'm)₂ Me Qp
(C₅R'm) is a cyclopentadienyl or substituted cyclopentadienyl; R' is hydrogen or hydrocarbyl radical(s) having 1-20 carbon atoms, and each R' can be the same or different; R" is an alkylene radical having 1-4 carbon atoms, a silicon hydrocarbyl group, a germanium hydrocarbyl group, an alkyl phosphine, or an alkyl amine, and R" acts to bridge the two (C₅R'm) rings; Q is a hydrocarbon radical having 1-20 carbon atoms or a halogen; Me is a group 4b, 5b, or 6b metal of the Periodic Table of Elements; m is an integer from 0-4; and p is an integer from 0-3;
(b) precipitating the complex of (a) with a hydrocarbon that is a nonsolvent for said complex wherein said hydrocarbon is selected from the group consisting of alycyclic and aliphatic hydrocarbons;
(c) prepolymerizing the precipitated complex of (b) by contacting said complex with propylene at a temperature from 25 ° C to 40 ° C; and
(d) polymerizing the propylene at a polymerization temperature higher than 50°C and lower than 85 ° C thereby producing symmetrical propylene particles between 300 and 800 microns with 90% of the particles being larger than 100 microns.

12. The process according to Claim 11 wherein the hydrocarbon is propylene and the precipitation is carried out at a temperature below the polymerization temperature.

13. The process according to Claim 11 wherein the temperature of said step (c) is held for a time between 1 and 6 minutes.

14. The process according to Claim 13 wherein the temperature of said step (c) is held for 5 minutes.

15. The process according to Claim 11 wherein said metallocene catalyst is selected from the group consisting of syndiospecific and isospecific metallocenes.

16. The process according to Claim 11 wherein said metallocene catalyst is selected from the group consisting of zirconocene, hafnocene and titanocene catalysts.

17. The process according to Claim 16 wherein said metallocene catalyst is a zirconocene catalyst.

18. The process according to Claim 16 wherein said organoaluminum compound is a methylalumoxane.

## Patentansprüche

1. Verfahren zur Herstellung symmetrischer Polypropylenpartikel, welches umfaßt:
(a) Vorpolymerisation eines gefällten aktiven Komplexes aus einer Organoaluminiumverbindung und einem Metallocenkatalysator durch Inkontaktbringen des Komplexes mit Propylen bei einer Temperatur von 25 °C bis 40 °C
(b) weitere Vorpolymerisation des Komplexes durch Erwärmen auf die Polymerisationstemperatur mit einer Geschwindigkeit von mindestens 4,5°C pro Minute.
(c) Polymerisation des Propylens bei einer Polymerisationstemperatur höher als 50 °C und niedriger als 85 °C, wobei symmetrische Polypropylenpartikel mit einer Teilchengröße zwischen 300 800 µm hergestellt werden, wobei 90% der Partikel größer als 100 µm sind und worin der Metallocenkatalysator durch folgende Formel beschrieben wird;
R''(C₅R'ₘ)₂ Me Qp
(C₅R'ₘ) ein Cyclopentadienyl- oder substituierter Cyclopentadienylring ist; R' Wasserstoff oder ein Kohlenwasserstoffrest(e) mit 1-20 Kohlenstoffatomen ist (sind) und jedes R' gleich oder verschieden sein kann; R" ein Alkylenrest mit 1-4 Kohlenstoffatomen, eine Silicium-Kohlenwasserstoffgruppe, eine Germanium-Kohlenwasserstoffgruppe, ein Alkylphosphan oder ein Alkylamin ist, und R" als Brücke zwischen den beiden (C₅R'ₘ)-Ringen fungiert; Q ein Kohlenwasserstoffrest mit 1-20 Kohlenstoffatomen oder ein Halogen ist; Me ein Metall der Gruppe 4b, 5b oder 6b des Periodensystems der Elemente ist; m eine ganze Zahl von 0-4 ist; und p eine ganze Zahl von 0-3 ist.

2. Verfahren nach Anspruch 1, worin der gefällte aktive Komplex hergestellt wird, indem die Organoaluminiumverbindung mit dem Metallocenkatalysator vorab in Kontakt gebracht wird, wodurch ein aktiver Komplex gebildet wird, und danach der aktive Komplex mit einem Kohlenwasserstoff, in dem der aktive Komplex nicht löslich ist, ausgefällt wird.

3. Verfahren nach Anspruch 2, worin der Metallocenkatalysator aus der Gruppe ausgewählt wird, die aus syndiospezifischen und isospezifischen Metallocenen besteht.

4. Verfahren nach Anspruch 1, worin der Metallocenkatalysator aus der Gruppe ausgewählt wird, die aus Zirconocen-, Hafnocen- und Titanocenkatalysatoren besteht.

5. Verfahren nach Anspruch 4, worin der Metallocenkatalysator ein Zirconocenkatalysator ist.

6. Verfahren nach Anspruch 1, worin die Organoaluminiumverbindung ein Methylalumoxan ist.

7. Verfahren nach Anspruch 1, worin die Vorpolymerisationtemperatur im Schritt (a) über einen Zeitraum zwischen 0 und 10 Minuten aufrechterhalten wird.

8. Verfahren nach Anspruch 1, worin die Vorpolymerisationsteinperatur 30 °C und die Polymerisationstemperatur 70 °C beträgt.

9. Verfahren nach Anspruch 1, worin der Komplex durch Erwärmen auf die Polymerisationstemperatur mit einer Geschwindigkeit von mindestens 5 °C pro Minute weiter vorpolymerisiert wird.

10. Verfahren nach Anspruch 1, worin der Komplex durch Erwärmen auf die Polymerisationstemperatur mit einer Geschwindigkeit von mindestens 10 °C pro Minute weiter vorpolymerisiert wird.

11. Verfahren nach Anspruch 1, worin die symmetrischen Polypropylenpartikel eine relativ enge Teilchengrößenverteilung haben, und worin das Verfahren umfaßt:
(a) vorheriges Inkontaktbringen einer Organoaluminiumverbindung mit einem Metallocenkatalysator, wobei sich ein aktiver Komplex bildet, worin der Metallocenkatalysator durch folgende Formel beschrieben wird:
R''(C₅R'ₘ)₂ Me Qp
(C₅R'ₘ) ein Cyclopentadienyl- oder substituierter Cyclopentadienylring ist; R' Wasserstoff oder ein Kohlenwasserstoffrest(e) mit 1-20 Kohlenstoffatomen ist (sind) und jedes R' gleich oder verschieden sein kann; R" ein Alkylenrest mit 1-4 Kohlenstoffatomen, eine Silicium-Kohlenwasserstoffgruppe, eine Germanium-Kohlenwasserstoffgruppe, ein Alkylphosphan oder ein Alkylamin ist, und R" als Brücke zwischen den beiden (C₅R'ₘ)-Ringen fungiert; Q ein Kohlenwasserstoffrest mit 1-20 Kohlenstoffatomen oder ein Halogen ist; Me ein Metall der Gruppe 4b, 5b oder 6b des Periodensystems der Elemente ist; m eine ganze Zahl von 0-4 ist; und p eine ganze Zahl von 0-3 ist.
(b) Ausfällen des Komplexes aus Schritt (a) mit einem Kohlenwasserstoff, in dem der Komplex nicht löslich ist, wobei der Kohlenwasserstoff aus der Gruppe ausgewählt wird, die aus alicyclischen und aliphatischen Kohlenwasserstoffen besteht;
(c) Vorpolymerisation des Komplexes aus Schritt (b) durch Inkontaktbringen des Komplexes mit Propylen bei einer Temperatur von 25 °C bis 40°C; und
(d) Polymerisation des Propylens bei einer Polymerisationstemperatur höher als 50 °C und niedriger als 85 °C, wobei symmetrische Polypropylenpartikel mit einer Teilchengröße zwischen 300 800 µm hergestellt werden, wobei 90% der Partikel größer als 100 µm sind.

12. Verfahren nach Anspruch 11, worin der Kohlenwasserstoff Propylen ist und die Ausfällung bei einer Temperatur unterhalb der Polymerisationstemperatur durchgeführt wird.

13. Verfahren nach Anspruch 11, worin die Temperatur bei Schritt (c) über einen Zeitraum zwischen 1 und 6 Minuten aufrechterhalten wird.

14. Verfahren nach Anspruch 13, worin die Temperatur bei Schritt (c) 5 Minuten lang aufrechterhalten wird.

15. Verfahren nach Anspruch 11, worin der Metallocenkatalysator aus der Gruppe ausgewählt wird, die aus syndiospezifischen und isospezifischen Metallocenen besteht.

16. Verfahren nach Anspruch 11, worin der Metallocenkatalysator aus der Gruppe ausgewählt wird, die aus Zirconocen-, Hafnocen- und Titanocenkatalysatoren besteht.

17. Verfahren nach Anspruch 16, worin der Metallocenkatalysator ein Zirconocenkatalysator ist.

18. Verfahren nach Anspruch 16, worin die Organoaluminiumverbindung ein Methylalumoxan ist.

## Revendications

1. Procédé de production de particules de polypropylène symétriques comprenant :
(a) prépolymériser un complexe actif précipité d'un composé organoaluminium avec un catalyseur métallocène par mise en contact du dit complexe avec le propylène à une température de 25°C à 40°C,
(b) prépolymériser ensuite le complexe en chauffant jusqu'à la température de polymérisation, à une vitesse de au moins 4,5^{o}C par minute, et
(c) polymériser le propylène à une température de polymérisation supérieure à 50°C et inférieure à 85°C en produisant ainsi des particules de polypropylène symétriques de taille comprise entre 300 et 800 microns, avec environ 90% des particules plus grandes que 100 microns,
dans lequel le dit catalyseur métallocène est décrit par la formule:
R''(C₅R'ₘ)₂ Me Qₚ
(C₅R'ₘ) est un cyclopentadiènyl ou un cyclopentadiènyl substitué; R' est de l'hydrogène ou un radical hydrocarbyl ayant de 1 à 20 atomes de carbone, et chaque R' peut être identique ou différent; R" est un radical alkylène ayant de 1 à 4 atomes de carbone, un groupe hydrocarbyl silicone, un groupe hydrocarbyl germanium, une alkyl phosphine, ou une alkyl amine, et R" établit un pont entre les deux anneaux (C₅R'ₘ,) ; Q est un radical hydrocarboné ayant de 1 à 20 atomes de carbone ou un halogène; Me est un métal appartenant aux groupes 4b, 5b, ou 6b du Tableau Périodique des Eléments; m est un entier compris entre 0 et 4; et p est un entier compris entre 0 et 3.

2. Procédé selon la revendication 1 dans lequel le dit complexe actif précipité est préparé par précontact du dit composé organoaluminium avec le dit catalyseur métallocène en formant ainsi un complexe actif, suivi d'une précipitation du dit complexe actif avec un hydrocarbure qui est un non solvant pour le dit complexe actif.

3. Procédé selon la revendication 2 dans lequel le dit catalyseur métallocène est choisi parmi le groupe constitué des métallocènes syndiospécifiques et isospécifiques.

4. Procédé selon la revendication 1 dans lequel le dit catalyseur métallocène est choisi parmi le groupe constitué des catalyseurs zirconocène, hafnocène et titanocène.

5. Procédé selon la revendication 4 dans lequel le dit catalyseur métallocène est un catalyseur zirconocène.

6. Procédé selon la revendication 1 dans lequel le dit composé organoaluminium est un méthylalumoxane.

7. Procédé selon la revendication 1 dans lequel la température de prépolymérisation de l'étape (a) est maintenue pendant une période allant de 0 à 10 minutes.

8. Procédé selon la revendication 1 dans lequel la température de prépolymérisation est de 30°C et la température de polymérisation est de 70°C.

9. Procédé selon la revendication 1 dans lequel le complexe est prépolymérisé ensuite en chauffant jusqu'à la température de polymérisation à une vitesse d'au moins 5°C par minute.

10. Procédé selon la revendication 1 dans lequel le complexe est prépolymérisé ensuite en chauffant jusqu'à la température de polymérisation à une vitesse d'au moins 10°C par minute.

11. Procédé selon la revendication 1 dans lequel les particules de polypropylène symétriques ont une distribution de taille des particules relativement étroite, le dit procédé comprenant :
(a) précontacter un composé organoaluminium avec un catalyseur métallocène en formant ainsi un complexe actif, le dit catalyseur métallocène étant décrit par la formule:
R''(C₅R'ₘ)₂ Me Qₚ
(C₅R'ₘ) est un cyclopentadiènyl ou un cyclopentadiènyl substitué; R' est de l'hydrogène ou un radical hydrocarbyl ayant de 1 à 20 atomes de carbone, et chaque R' peut être identique ou différent; R" est un radical alkylène ayant de 1 à 4 atomes de carbone, un groupe hydrocarbyl silicone, un groupe hydrocarbyl germanium, une alkyl phosphine, ou une alkyl amine, et R" établit un pont entre les deux anneaux (C₅R'ₘ) ; Q est un radical hydrocarboné ayant de 1 à 20 atomes de carbone ou un halogène; Me est un métal appartenant aux groupes 4b, 5b, ou 6b du Tableau Périodique des Eléments; m est un entier compris entre 0 et 4; et p est un entier compris entre 0 et 3;
(b) précipiter le complexe de (a) avec un hydrocarbure qui n'est pas un solvant pour le dit complexe, le dit hydrocarbure étant choisi parmi le groupe constitué des hydrocarbures alycylique et aliphatique;
(c) prépolymériser le complexe précipité de (b) en contactant le dit complexe avec du propylène à une température de 25°C à 40°C; et
(d) polymériser le propylène à une température de polymérisation supérieure à 50°C et inférieure à 85°C en produisant ainsi des particules de polypropylène symétriques de taille comprise entre 300 et 800 microns, avec 90% des particules plus grandes que 100 microns.

12. Procédé selon la revendication 11 dans lequel l'hydrocarbure est du propylène et la précipitation est effectuée à une température inférieure à la température de polymérisation.

13. Procédé selon la revendication 11 dans lequel la température de l'étape (c) est maintenue pendant une période allant de 1 à 6 minutes.

14. Procédé selon la revendication 13 dans lequel la température de l'étape (c) est maintenue pendant 5 minutes.

15. Procédé selon la revendication 11 dans lequel le dit catalyseur métallocène est choisi parmi le groupe constitué des métallocènes syndiospécifiques et isospécifiques.

16. Procédé selon la revendication 11 dans lequel le dit catalyseur métallocène est choisi parmi le groupe constitué des catalyseurs zirconocène, hafnocène et titanocène.

17. Procédé selon la revendication 16 dans lequel le dit catalyseur métallocène est un catalyseur zirconocène.

18. Procédé selon la revendication 16 dans lequel le dit composé organoaluminium est un méthylalumoxane.
